# EUROPEAN PATENT APPLICATION

(11) **EP 2 544 511 A1**
(43) Date of publication of application: **09.01.2013**
(21) Application number: 11305859.8
(22) Date of filing: 04.07.2011
(51) Int. Cl.: H05B 37/00, H02J 9/00

(54) **Local controllable load system**

(71) Applicant: Koninklijke Philips Electronics N.V., 5621 BA Eindhoven (NL)
(72) Inventor: The designation of the inventor has not yet been filed
(74) Representative: Roche, Denis

(57) **Abstract**

The invention relates to a local controllable load system for operating at least one electrical device (10), to be part of a general electrical system comprising a general power supply (200) of electrical current of a first type, the at least one electrical device (10) operating with an electrical current of a second type, the local controllable load system (100, 100') comprising:
- a converter (20) to be connected to the general power supply (200) for converting said electrical current of the first type into said electrical current of the second type delivered to the other elements of the local controllable load system through a converter output (22);
- a power storing device (30), delivering electrical current of the second type, and connectable to the converter output (22) for storing the power;
- a first channel (1) to connect the converter output (22) to the at least one electrical device (10);
- a second channel (2) to connect the power storing device (30) to the at least one electrical device (10);
- a first charge controller (40) adapted to modify first and second electrical current values supplied to the at least one electrical device (10) through, respectively, the first and the second channels (1, 2), depending on information about the general electrical system.

The invention relates also to a method of locally controlling the power of said local controllable load system (100, 100').

## Description

### FIELD OF THE INVENTION

The invention relates to the field of energy control of electrical devices, and especially LED-based lighting devices.

### BACKGROUND OF THE INVENTION

Electrical devices in buildings may have high peaks of energy consumption when some conditions are fulfilled: air conditioning when ambient temperature is higher than a temperature threshold, heating when ambient temperature is lower than a temperature limit, illumination when the light in a room is lower than an illumination limit value, water heating if the quantity of hot water in a building is below a determined quantity limit, etc.

This energy can be consumed during peak-demand-hours, when the tariffs are usually high.

In the particular case of lighting in commercial buildings, such as lighting devices comprising LED(s) which offer much more possibility of control than conventional lighting devices, lighting contributes 35-40% of the total energy demand, and this energy is consumed during the peak-demand-hours corresponding to day-time.

There is therefore a need to decrease the price of this energy consumption.

Also, in the future, intermittent renewable energy (e.g. solar energy, wind, hydroelectric, fuel cells, Reformed Methanol Fuel Cell (RMFC), Ocean Thermal Energy Conversion (OTEC), kinetic energy, piezoelectric, pyro-electric, thermoelectric, electrostatic, capacitive, tidal, salinity gradient) might be plenty when such electrical devices are not needed and, on the contrary, these electrical devices might be needed when the energy supplied is not from a renewable energy source. Both situations call for demand response.

There is therefore also a need to use preferably green than grey energies.

To try to solve these problems, US2010/0301769 discloses a power management module provided in an electrical architecture of a building to select the power source to be used for supplying the architecture with energy (based on peak-demand hours information, the type and status of the different power sources, the weather, and other possible criteria) and convert this energy in a proper manner for the architecture. The power source to be used is selected from said mains grid, renewal source and a battery charged by the mains grid and/or by the renewal source.

### SUMMARY OF THE INVENTION

An object of the invention is to provide a more flexible and cost-effective control of the power supplied to an electrical device or architecture.

The invention attempts to solve these problems by providing a local controllable load system for operating at least one electrical device, to be part of a general electrical system comprising a general power supply of electrical current of a first type (e.g. alternating current, so-called "AC"), the at least one electrical device operating with an electrical current of a second type (e.g. direct current, so-called "DC"), the local controllable load system comprising:
- a converter to be connected to the general power supply for converting said electrical current of the first type into said electrical current of the second type delivered through a converter output;
- a converter to be connected to the general power supply for converting said electrical current of the first type into said electrical current of the second type delivered to the other elements of the local controllable load system through a converter output;
- a power storing device, delivering electrical current of the second type, and connectable to the converter output for storing the power;
- a first channel to connect the converter output to the at least one electrical device;
- a second channel to connect the power storing device to the at least one electrical device;
- a first charge controller adapted to modify first and second electrical current values supplied to the at least one electrical device through, respectively, the first and the second channels, depending on information about the general electrical system.

Said "information about the general electrical system" might comprise energy price(s) supplied by the general power supply and/or a load information of the general electrical system and/or the nature of the energetic source (grey or green) of the general power supply and/or ranges of times in a day associated with specificities of the general power supply over time and/or any kind of other related information.

This information may be delivered in a real-time, from a network possibly part of the general electrical system and/or be stored in a memory and predefined based on known information of the general electrical supply and/or be generated by an algorithm based on data or criteria or parameters of the general electrical system known or received from a network.

This information is used, directly or indirectly, by the first charge controller in order for it to implement said modifications of electrical currents.

According to this embodiment of the invention, the local controllable load system can therefore tune or balance or select locally, via the first charge controller, its source(s) of energy (between general power supply and/or the local power storing device), based on information about the general electrical system, and in particular adapt its proper consumption of energy provided by the general power supply.

Performing this adaptation locally may allow the local controllable load system to use this information alone or together with local information, order or signal related to the use and control of the local electrical device(s), for finally obtaining an optimized local consumption of energy regardless the power consumed by each other external electrical device used in the general electrical system.

In particular, the local controllable load system may be an intelligent system which manages the power supply by taking into account only the local needs (i.e. energy needed for said at least one electrical device). This local controllable load system can therefore refine more accurately the energy consumption than in the case this tuning would have been done at the general supply.

Alternatively or in combination, the local controllable load system may also take into account general requests, received from a network, for modifying the consumption of the load controllable load system for more general purposes (e.g. general request for decreasing energy consumption - by using the power storing device - or for general needs; or emergency signal).

Moreover, providing the power storing device in the local controllable load system decreases the loss of energy due to energy conversions, controls and transportation which could be found with general power storing devices provided at the general supply level (typically provided on the mains grid).

Indeed, prior art discloses batteries on the mains grid or upstream the controller, and thus usually requires invertors for converting the DC power from a remote battery into AC power, battery charge controllers to manage incoming AC power to fill the remote battery, housing where batteries can be operated in their comfort zone with potential heating to be provided in winter and cooling in summer.

As an example relating to lighting case, once the energy is released in a LED lamp, roughly 30% is wasted because 10% is lost in DC to AC conversion, 10% is lost in transportation losses, and 10% is lost to convert AC into the DC LED system.

Additionally, this local power storing principle, used as an alternative to the general power supply, should remove, or at least decrease the size of, the general power storing devices provided on the mains grid and the important costs involved in such general power storing devices.

As an option, the electrical current of the first type is an alternating current ("AC") and the electrical current of the second type is a direct current ("DC"). Alternatively the electrical current of the first type may be a DC and the electrical current of the second type may be an AC, or the electrical current of the first type may be a DC of a first type and the electrical current of the second type may be a DC of a second type, or the electrical current of the first type may be an AC of a first type and the electrical current of the second type may be an AC of a second type, or the electrical current of the first type may be a more complicated type of current (e.g. a non-periodic current) and the electrical current of the second type may be a DC or any other type of current.

As an option, the first charge controller is particularly arranged to switch the power supply of the at least one electrical device between the converter output and the power storing device.

Therefore, the electrical device(s) is (are) supplied by the general power supply or by the power storing device, based on the information about the general electrical system. In this particular case, the power storing device is used as an entire and actual alternative supply to the general power supply.

As another option, the first charge controller is further adapted to drive the load value of the at least one electrical device based on driving information. This driving information may be issued for example from data remotely received (e.g. through a network) and/or from a user interface and/or from a data storing device. Thus, the first charge controller further drives the load of the local controllable load system, and can use both the information about the general electrical system and the driving information for optimizing the control of the powering of the electrical device(s). This particular option allows to use both general needs and local needs to optimize the energy consumed by the electrical device(s).

As another option, the local controllable load system further comprises a second charge controller arranged to modify the electrical current value supplied to the power storing device from the converter output, depending on information about the general electrical system.

Further to the electrical device(s), the power storing device can thus use the information about the general electrical system to adapt the energy consumption of its power storage, which leads to an even better optimisation of the energy consumed by the overall local controllable load system.

As another option, the local controllable load system further comprises a second charge controller arranged to allow or not the power storing device to receive electrical current from the converter output depending on information about the general electrical system.

Therefore, the power storing device is supplied by the general power supply or is not supplied at all, to charge its power storage, based on the information about the general electrical system, which leads to an even better optimisation of the energy consumed by the overall local controllable load system.

As an option, said first and second charge controllers are configured such that the at least one electrical device and the power storing device can simultaneously receive electrical currents from the converter output, depending on information about the general electrical system.

In this case the information about the general electrical system triggers the supply of the main components of the local controllable load system (i.e. the electrical device(s) and the power storing device), which may lead to a better optimisation of the consumption, in particular, when it is not desirable that the local controllable load system is not supplied by the general power supply during determined time durations or instants.

As an option, the second charge controller is configured to modify the electrical current value supplied to the power storing device until a maximum electrical current value, depending on the load of the at least one electrical device and/or on information about the general electrical system.

For optimizing further the energy consumption, it may be indeed interesting to adapt the power supplied to the power storing device from the general power supply, based on the actual and current consumption of the electrical device(s), while taking into account of the information of the general electrical system. Later information may give a positive, negative or intermediary indication(s) about the power supplied by the general electrical system, leading to a decision (taken for instance by the second charge controller, based on predetermined criteria) about the power to be consumed by the local system during a certain period of time, involving the second charge controller in adapting the charge of the power storing device accordingly, for a better optimization of the consumption.

As an option, the information about the general electrical system comprises at least one indicator value representative of information relating to the general electrical system, and the first charge controller is arranged to allow the at least one electrical device to receive electrical current only from the converter output if this at least one indicator value is below predetermined value(s).

This kind of threshold principle (i.e. based on said predetermined value) is simple to implement and lead to determine at least two status for the local controllable load system: a first status is the case the electrical device(s) is supplied only by the general power supply and a second status may be the case the electrical device(s) is supplied not only by the general power supply (e.g. the electrical device(s) is supplied by the power storing device and the general power supply).

The first charge controller may be further arranged to allow the at least one electrical device to receive electrical current only from the power storing device if this at least one indicator value is beyond predetermined value(s).

This further kind of threshold principle (i.e. based on said predetermined value) is simple to implement and lead to determine at least a second or third status for the local controllable load system, corresponding to the case for which the electrical device(s) is supplied only by the power storing device. The predetermined value(s) in this case may be the same as or different from the predetermined value used for deciding if the electrical device(s) receives or not electrical current only from the converter output.

Optionally, the local controllable load system further comprises a second charge controller arranged to allow or not the power storing device to receive electrical current from the converter output depending on information about the general electrical system, this second charge controller being configured to allow the power storing device to receive electrical current from the converter output until full power storing only if this at least one indicator value is below said predetermined value(s).

This kind of threshold principle (i.e. based on said predetermined value) is simple to implement and lead to determine at least two status for the power storing device: a first status is the case the power storing device is supplied only by the general power supply until the power storing device is fully charged and a second status may be the case the power storing device is supplied not only by the general power supply until the power storing device is fully charged. Some specific second, third, etc status may be predefined. E.g. the power storing device is supplied from the converter output while it supplies the electrical device(s) and/or the power storing device is charged until it is half-fully charged and/or the consumption of the power storing device changes over time depending on the consumption of the electrical device(s) and/or information about the general electrical system.

As another option of the invention, the local controllable load system further comprises a second charge controller arranged to allow or not the power storing device to receive electrical current from the converter output depending on information about the general electrical system. The first and second charge controller may be further arranged to define the following two alternative electrical configurations:
(1) allowing both the at least one electrical device and the power storing device to receive electrical current from the converter output, while preventing the power storing device to deliver electrical current to the at least one electrical device via the second channel,
(2) allowing the power storing device to deliver electrical current to the at least one electrical device via the second channel, while preventing both the at least one electrical device and the power storing device to receive electrical current from the converter output;
depending on information about the general electrical system.

The local controllable load system is switched therefore between the two configurations (1) and (2) (based on the information about the general electrical system), i.e. a power supply of its components provided only by the general power supply or a power supplied to the electrical device(s) provided only by the power storing device. This specific option of the invention is not limited to the use of only two configurations, further configurations may be defined.

In a particular case of the preceding option of the invention, the information about the general electrical system may comprise at least one indicator value representative of information relating to the general electrical system, and the configuration (1) is defined when this at least one indicator value is below predetermined value(s) and the configuration (2) is defined when this at least one indicator value is beyond the predetermined value(s).

This kind of threshold principle (i.e. based on said predetermined value) is simple to implement and lead to implement automatically the at least two configurations (1) and (2) according to this option.

As another particular case of the preceding option, the local controllable load system may further comprise a tuning device allowing to tune the load of the at least one electrical device for the configuration (2) and configured to optimize the energy consumption of the at least one electrical device based on some defined desirable needs of consumption for the at least one electrical device and the quantity of power stored in the power storing device.

The "defined desirable needs of consumption" may be defined by the user from a user interface and/or ordered remotely by a remote controller and/or stored or programmed.

The "quantity of power stored in the power storing device" may be measured by tools or instruments for monitoring this quantity of power implemented, when the power storing device was charged and/or when the power storing device is charged.

This other particular case may be useful when the autonomy of the local controllable load system is required for a certain duration. This other particular case might be implemented, in particular, in the case the use of the power storing device is triggered by an emergency event included in the information about the general electrical system.

A minimum of acceptable power to be used for the loading of the electrical device(s) may be defined and used for loading the electrical device(s) in case the autonomy of the local controllable load system needs to be maximum.

Said tuning device may comprise a stored scenario of energy consumption in case both the at least one electrical device and the power storing device are prevented to receive electrical current from the converter output due to emergency or accidental events. The emergency or accidental events can be comprised in the information about the general electrical system, and delivered directly or indirectly to the first and second charge controllers.

As another option of the invention, the first charge controller is further arranged to transmit to a network a status information of the electrical device(s). Therefore the nodes or elements of the network may be aware of the status of the load at the local controllable load system, which might be useful for the general management of a general system or for another local management of a local load system.

As another option, the at least one electrical device comprises at least one LED for light emission purpose. In this case, the local controllable load system further comprises a LED driver comprising the first charge controller, and the second charge controller if any. The integration of such charge controllers can be cost-effective, since involving minor modification of the LED driver. Therefore the implementation of the invention in an existing LED-based local system is at low costs.

### BRIEF DESCRIPTION OF THE DRAWINGS

FIG. 1 shows a schematic representation of an electrical arrangement of a first local controllable load system according to the invention.
FIG. 2 shows a schematic representation of an electrical arrangement of a second local controllable load system according to the invention.
FIG. 3 shows a schematic representation of a first electrical arrangement of a third local controllable load system according to the invention.
FIG. 4 shows a schematic representation of a second electrical arrangement of the third local controllable load system of FIG. 3.
FIG. 5 shows a schematic representation of a third electrical arrangement of the third local controllable load system of FIG. 3.
FIG. 6 shows a schematic representation of a fourth electrical arrangement of the third local controllable load system of FIG. 3.
FIG. 7 shows a schematic representation of the electrical arrangement of a local digitally controllable LED-based system according to the invention.
FIG. 8 shows a schematic representation of the electrical arrangement of another local digitally controllable LED-based system according to the invention.
FIG. 9 is a diagram showing the power consumption (Y-axis) of a local controllable LED-based system, over a day (X-axis), when this power is supplied by a general power supply.
FIG. 10 is a diagram showing the tariffs (Y-axis) over a day (X-axis) of a power supplied by a general power supply.

### DETAILLED DESCRIPTION OF THE INVENTION

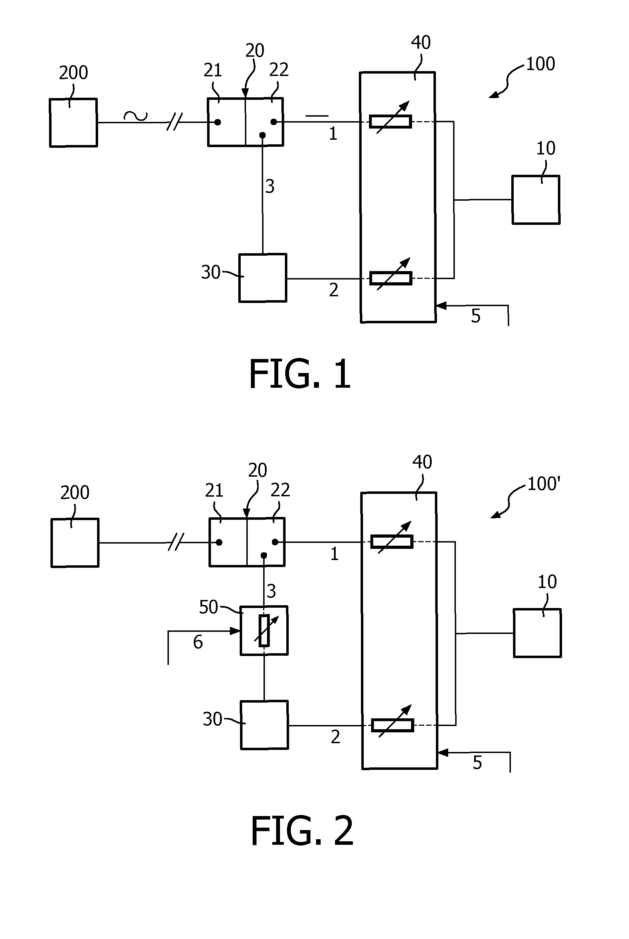

FIG. 1 shows a schematic representation of a first electrical arrangement of a local controllable load system 100 (hereinafter "local system"), supplied with AC power by a general power supply 200. Both the general power supply 200 and the local system 100 are part of a general electrical system, which might comprise additional local systems.

This local system 100 is provided to operate an electrical device 10 (or a plurality of electrical devices) supplied with DC power.

The local system 100 comprises therefore an AC/DC converter 20 connected on one hand, via the converter input 21, to the general power supply 200 and on the other hand, via the converter output 22, to the electrical device 10 through a first channel 1.

Additionally, the local system 100 comprises a battery 30 delivering DC power to the electrical device 10 via a second channel 2. Furthermore, the battery 30 is connectable to the converter output 22 through a third channel 3. Therefore the battery 30 can be charged by the general power supply 200 through the converter 20.

The local system 100 further comprises a first charge controller 40 adapted to modify first and second electrical current values supplied to the electrical device 10 through, respectively, the first channel 1 and the second channel 2.

The control of the electrical currents in said first and second channels 1, 2 depends on information related to the general electrical system, or in particular to the general power supply 200.

This information might comprise price(s) or tariffs of the energy supplied by the general power supply 200 to the local controllable load system 100 and/or a load information of the general electrical system and/or the nature of the energetic source (grey or green) of the general power supply 200 and/or ranges of times in a day associated with specificities of the general power supply 200 over time and/or any other type of related informaiton.

This information may be delivered in a real-time manner, from a network possibly part of the general electrical system and/or be predetermined and stored in a memory based on known information of the general electrical supply and/or be generated by an algorithm based on data or criteria or parameters known or received from a network (not shown).

This information results in a control order sent to the first charge controller 40 through a first data channel 5, so as to implement said modifications of electrical currents. Different control orders may be stored in a memory (not shown), each control order being triggered depending on the information related to the general electrical system, according to a predetermined scenario.

It is to be noted that each electrical current value in channels 1, 2 can be have any value, including negative, zero or positive value. As an example the value of the electrical current in the first channel 1 can be fixed to zero while the electrical current in the second channel 2 can be fixed to a non-zero value; or the value of the electrical current in the first channel 1 can be fixed to a non-zero value while the electrical current in the second channel 2 can be fixed to zero; or the value of the electrical current in the first channel 1 can be fixed to a first non-zero value while the electrical current in the second channel 2 can be fixed to a second non-zero value. The value of each electrical current can furthermore vary over time, depending on information about the general electrical system.

FIG. 2 shows a schematic representation of an electrical arrangement of a second local system 100' according to the invention, comprising the same elements as the first local system 100 of FIG. 1, but further comprising a second charge controller 50 provided in the third channel 3.

The second charge controller 50 is adapted to modify the electrical current value supplied from the converter output 22 to the battery 30 through the third channel 3.

The control of the electrical current in said third channel 3 depends on information related to the general electrical system, or in particular to the general power supply 200.

This information might comprise price(s) or tariffs of the energy supplied by the general power supply 200 to the local controllable load system 100' and/or a load information of the general electrical system and/or the nature of the energetic source (grey or green) of the general power supply 200 and/or ranges of times in a day associated with specificities of the general power supply 200 over time and/or any other kind of related information.

This information may be delivered in a real-time manner, from a network possibly part of the general electrical system and/or be predetermined and stored in a memory based on known information of the general electrical supply and/or be generated by an algorithm based on data or criteria or parameters known or received from a network (not shown).

This information results in control order sent to the second charge controller 50 through a second data channel 6, so as to implement said modifications of electrical current. Different control orders may be stored in a memory (not shown), each control order being triggered depending on the information related to the general electrical system, according to a predetermined scenario.

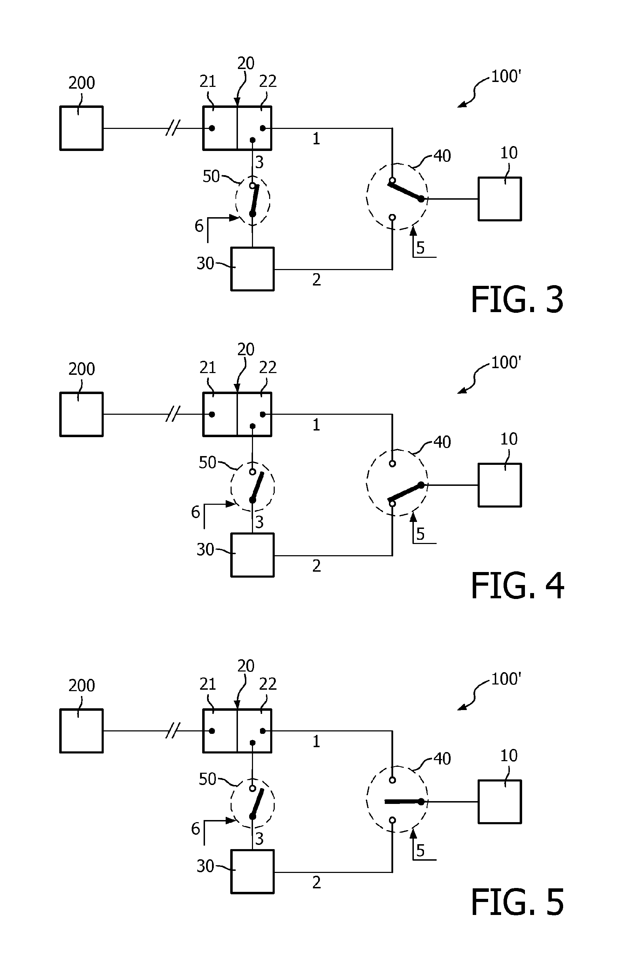

FIG. 3, FIG. 4, FIG. 5, FIG. 6 depict a specific local system 100' having different electrical configurations, in which the first charge controller 40 is arranged to switch the power supply of the electrical device 10 between the converter output 22 and the battery 30, depending on information related to the general electrical system. Furthermore, the second charge controller 50 is arranged to allow or not the battery 30 to receive electrical current from the converter output 22 depending on information about the general electrical system.

FIG. 3 depicts a first electrical configuration for which the first charge controller 40 switches on the supply of the electrical device 10 by the general power supply 200 and the second charge controller 50 allows the battery 30 to be charged from the general power supply 200.

This first electrical configuration may be defined from the value of an indicator representative of information relating to the general electrical system, if this indicator value is below a predetermined value. As an example, if this indicator value is representative of the tariff of the power supplied by the general power supply 200, this first electrical configuration is chosen in case the current tariff is below a predetermined tariff, i.e. if the tariff is sufficiently low.

An alternative to the first electrical configuration is an electrical configuration (not depicted) in which the first charge controller 40 still switches on the supply of the electrical device 10 by the general power supply 200 but the second charge controller 50 does not allow the battery 30 to be charged.

This other specific electrical configuration may be chosen if the battery 30 is full or there is no need to charge it for use whatever the information about the general electrical system is and/or said indicator value is between a first predetermined value and a second predetermined value giving an intermediate status for which the load of the electrical device 10 from the general power supply 200 is more preferable than the charge of the battery 30.

FIG. 4 depicts a second electrical configuration for which the first charge controller 40 switches on the supply of the electrical device 10 by the battery 30 and the second charge controller 50 does not allow the battery 30 to be charged from the general power supply 200.

This second electrical configuration may be chosen from the value of an indicator representative of information relating to the general electrical system, if this indicator value is beyond a predetermined value. As an example, if this indicator value is representative of the tariff of the power supplied by the general power supply 200, this second electrical configuration is chosen in case the current tariff is beyond a predetermined tariff, i.e. if the tariff is too high.

An alternative to the second electrical configuration is an electrical configuration (not depicted) in which the first charge controller 40 still switches on the supply of the electrical device 10 by the battery 30 but the second charge controller 50 allows the battery 30 to be charged from the general power supply 200.

This other specific electrical configuration may be chosen if the battery 30 is empty or need absolutely to be charged for use whatever the information about the general electrical system is and/or said indicator value is between a first predetermined value and a second predetermined value giving an intermediate status for which the charge of the battery 30 is desirable while the load of the electrical device 10 from the general power supply 200 is not.

FIG. 5 depicts a third electrical configuration for which the first charge controller 40 switches off the supply of the electrical device 10 and the second charge controller 50 does not allow the battery 30 to be charged from the general power supply 200.

Similarly to the second electrical configuration, this third electrical configuration can be chosen if said indicator value is beyond a predetermined value, when the electrical device 10 is off.

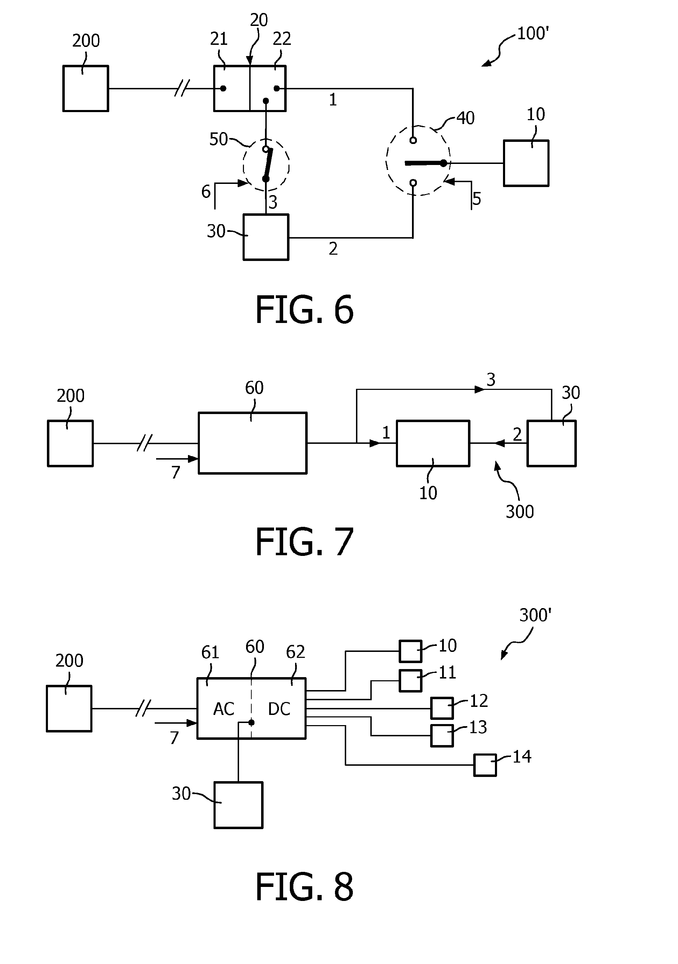

FIG. 6 depicts a fourth electrical configuration for which the first charge controller 40 switches off the supply of the electrical device 10 and the second charge controller 50 allows the battery 30 to be charged from the general power supply 200.

Similarly to the first electrical configuration, this fourth electrical configuration can be chosen if said indicator value is below a predetermined value, when the electrical device 10 is off.

FIG. 7 shows a schematic representation of the electrical arrangement of a local digitally controllable LED-based system 300 (the "local system" 300) according to the invention.

This local system 300 is provided to operate a LED module 10 (or a plurality of LED modules) powered with DC.

The local system 300 comprises a LED driver 60 comprises an AC/DC converter connected on one hand to the general power supply 200 and on the other hand to the LED module 10 through a first channel 1. The local system 300 further comprises a battery 30 delivering DC power to the LED module 10 via a second channel 2, the battery 30 being connectable to the LED driver 60 through a third channel 3.

The LED driver 60 further comprises driver elements arranged to adapt the electrical loading of the LED module 10 and of the battery 30 with power delivered by the general power supply 200, based on information about the general electrical system provided through a data channel 7. If said driver elements do not allow the LED module 10 and the battery 30 to be loaded from the general power supply, the LED module 10 is then automatically loaded from the battery 30.

Furthermore, the LED driver 60 comprises elements for dimming the LED module 10, and in particular for switching off the LED module 10, and therefore for defining the loading current supplied by the general power supply 200 or by the battery 30.

The LED driver 60 may receive dimming information from a network, such as a large area network, through gateways. This dimming information might be provided according to standards of communication (e.g. DALI, DECT, DIM, or other standards). Alternatively or in combination, some dimming information may be received locally through a user interface and/or predetermined according to a dimming scenario depending on the information related to the general electrical system. In any case, the dimming information is received through data channel 7.

The LED driver 60 may be further arranged for providing status information of the LED module 10 to the network.

Therefore, by adding a battery 30 to a LED-based luminaire and a small modification to the electronics of the LED driver 60, it is possible to design driver electronics that can control the energy flow and decide from which source (mains grid 200 or battery 30) the LED module 10 is operated as well as charge the battery 30 when cheap energy is available. A large part of the required system components (power electronics, network connection, processing power, software stack, etc) are already present in known LED-based luminaires. So the features of the invention can be added in a more cost effective way compared to dedicated large scale on-grid systems.

FIG. 8 shows a schematic representation of the electrical arrangement of another local digitally controllable LED-based system 300 (the "local system" 300) according to the invention, comprising a plurality of LED modules 10, 11, 12, 13, 14. In this case the LED driver 60 and the battery 30 are typically assembled together in same housing, the LED modules 10, 11, 12, 13, 14 being then located remotely or closely in a luminaire.

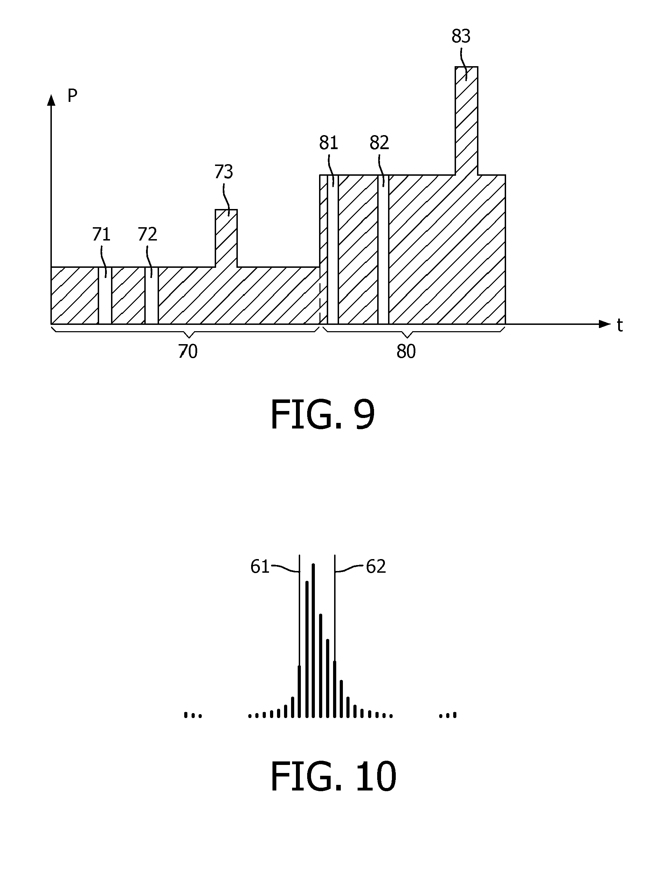

FIG. 9 shows an example of a dimming scenario determined from the different tariffs of the power supplied by the general power supply 200, over a day.

FIG. 10 shows an example of tariffs for energy over a day. Between hour 61 and hour 62 of the day, the tariffs are high ("day-tariff') and outside this period of time, the tariffs are low ("valley tariff").

During the valley-period 70 of the valley-tariff, the LED module 10 is off and the battery 30 is charged slowly to full. As a way of example to depict a specific situation, the tariffs during two time slots 71 and 72 of this valley-period 70 were exceptionally high, and the local digitally controllable LED-based system 300 received this information. The system 300 stopped accordingly the charge of the battery 30 during these short times, until the end of these exceptionally high tariffs. In order to compensate these non charging moments of the battery 30, the local system 300 increased the charge of the battery for a third time slots 73 during which the tariff was exceptionally free, based on the corresponding information received by the system 300.

During the day-period 80 of the day-tariff, the LED module 10 is on, and supplied both by the general power supply 200 and by the battery 30 (fully charged during the valley-period 70). As a way of example to depict a specific situation, the tariffs during two time slots 81 and 82 of this day-period 70 were exceptionally high, and the local digitally controllable LED-based system 300 received this information. The system 300 stopped accordingly the power supply of the LED module 10 from the general power supply 200 during these short times 81, 82, until the end of these exceptionally high tariffs. During these two time-slots 81 and 82, the LED module 10 was entirely supplied by the battery 30. In order to compensate these moments of high consumption of the power of the battery 30, the system 300 increased the charge of the battery for a third time slots 83 during which the tariff was exceptionally low, based on the corresponding information received by the system 300.

In this example, it is clearly shown that the energy consumption of the LED-based system 300 is minimized, even if the LED module 10 is operated during day-period, since part of the energy come from the battery 30 charged during the valley-period.

In case of a power outage, the system 300, and in particular the battery 30, can also be used for emergency lighting at no extra cost, when received information related to this power outage.

While the invention has been illustrated and described in detail in the drawings and foregoing description, such illustration and description are to be considered illustrative or exemplary and not restrictive; the invention is not limited to the disclosed embodiments, and the person skilled in the art can clearly adapt the teaching of the invention, especially relating to the remote heat core principle, to any other light configurations. In particular the lighting system does not necessarily comprise identical shapes of optical modules.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A local controllable load system (100, 100') for operating at least one electrical device (10), to be part of a general electrical system comprising a general power supply (200) of electrical current of a first type, the at least one electrical device (10) operating with an electrical current of a second type, the local controllable load system (100, 100') comprising:
- a converter (20) to be connected to the general power supply (200) for converting said electrical current of the first type into said electrical current of the second type delivered to the other elements of the local controllable load system through a converter output (22);
- a power storing device (30), delivering electrical current of the second type, and connectable to the converter output (22) for storing the power;
- a first channel (1) to connect the converter output (22) to the at least one electrical device (10);
- a second channel (2) to connect the power storing device (30) to the at least one electrical device (10);
- a first charge controller (40) adapted to modify first and second electrical current values supplied to the at least one electrical device (10) through, respectively, the first and the second channels (1, 2), depending on information about the general electrical system.

2. Local controllable load system of claim 1, wherein the electrical current of the first type is an alternating current and the electrical current of the second type is a direct current.

3. Local controllable load system of claim 1, wherein the first charge controller (40) is arranged to switch the power supply of the at least one electrical device (10) between the converter output (22) and the power storing device (30).

4. Local controllable load system of claim 1, wherein the first charge controller (40) is further adapted to drive the load value of the at least one electrical device (10) based on driving information.

5. Local controllable load system of claim 1, further comprising a first charge controller (50) arranged to modify the electrical current value supplied to the power storing device (30) from the converter output (22) depending on information about the general electrical system.

6. Local controllable load system of claim 1, further comprising a first charge controller (50) arranged to allow or not the power storing device (30) to receive electrical current from the converter output (22) depending on information about the general electrical system.

7. Local controllable load system of claim 5 or 6, wherein the first and second charge controllers (40, 50) are configured such that the at least one electrical device (10) and the power storing device (30) can simultaneously receive electrical currents from the converter output (22), depending on information about the general electrical system.

8. Local controllable load system of claim 7, wherein the first charge controller (50) is configured to modify the electrical current value supplied to the power storing device (30) until a maximum electrical current value, depending on the load of the at least one electrical device (10) and/or on information about the general electrical system.

9. Local controllable load system of claim 1, wherein the information about the general electrical system comprises at least one indicator value representative of information relating to the general electrical system, and wherein the first charge controller (40) is arranged to allow the at least one electrical device (10) to receive electrical current only from the converter output (22) if this at least one indicator value is below predetermined value(s).

10. Local controllable load system of claim 9, wherein the first charge controller (40) is further arranged to allow the at least one electrical device (10) to receive electrical current only from the power storing device (30) if this at least one indicator value is beyond predetermined value(s).

11. Local controllable load system of claim 9 or 10, further comprising a first charge controller (50) arranged to allow or not the power storing device (30) to receive electrical current from the converter output (22) depending on information about the general electrical system, and wherein the first charge controller (50) is configured to allow the power storing device (30) to receive electrical current from the converter output (22) only if this at least one indicator value is below said predetermined value(s).

12. Local controllable load system of claim 1, further comprising a first charge controller (50) arranged to allow or not the power storing device (30) to receive electrical current from the converter output (22) depending on information about the general electrical system, and wherein the first and second charge controllers (40, 50) are further arranged to define the following two alternative electrical configurations:
(a) allowing both the at least one electrical device (10) and the power storing device (30) to receive electrical current from the converter output (22), while preventing the power storing device (30) to deliver electrical current to the at least one electrical device (10) via the second channel (2),
(b) allowing the power storing device (30) to deliver electrical current to the at least one electrical device (10) via the second channel, while preventing both the at least one electrical device (10) and the power storing device (30) to receive electrical current from the converter output (22);
depending on information about the general electrical system.

13. Local controllable load system of claim 12, wherein the information about the general electrical system comprises at least one indicator value representative of information relating to the general electrical system, and wherein the configuration (a) is defined when this at least one indicator value is below predetermined value(s) and the configuration (b) is defined when this at least one indicator value is beyond the predetermined value(s).

14. Local controllable load system of claim 12, further comprising tuning device allowing to tune the load of the at least one electrical device (10) for the configuration (b) and configured to optimize the energy consumption of the at least one electrical device (10) based on some defined desirable needs of consumption for the at least one electrical device (10) and the quantity of power stored in the power storing device (30).

15. Local controllable load system of claim 14, wherein the tuning device comprises a stored scenario of energy consumption in case both the at least one electrical device (10) and the power storing device (30) are prevented to receive electrical current from the converter output (22) due to emergency or accidental events.

16. Local controllable load system according to one of the preceding claims, wherein said information about the general electrical system is issued from predetermined and stored data stored in a data storing device in connection with the first controller and/or from a network of data communication which is part of the general electrical system.

17. Local controllable load system according to one of claims 1 or 9 to 11 or 13 or 16, wherein the information about the general electrical system comprises energy price(s) of the general power supply (200) and/or the load of the general electrical system and/or the nature of the energetic source (grey or green) of the general power supply (200) and/or ranges of times in a day associated with specificities of the general power supply (200) over time.

18. Local controllable load system of claim 1, wherein the first charge controller (40) is further arranged to transmit to a network a status information of the at least one electrical device (10).

19. Local controllable load system of claim 1, wherein the at least one electrical device (10) comprises at least one LED for light emission purpose.

20. Local controllable load system of claim 19, further comprising a LED driver, wherein the LED driver comprises the first charge controller (40).

21. Local controllable load system of claims 20, further comprising a LED driver, further comprising a first charge controller (50) arranged to modify the electrical current value supplied to the power storing device (30) from the converter output (22) depending on information about the general electrical system, and wherein the LED driver comprises the first charge controller (50).

22. A method of locally controlling the power of a local controllable load system (100, 100') comprising at least one electrical device (10), part of a general electrical system comprising a general power supply (200) of electrical current of a first type, the at least one electrical device (10) operating with an electrical current of a second type, the method comprising:
- providing a converter (20) to convert said electrical current of the first type into said electrical current of the second type to be delivered to the other elements of the local controllable load system through a converter output (22);
- providing a power storing device (30) delivering electrical current of the second type, and connectable to the converter output (22) for storing power;
- connecting the converter output (22) to the at least one electrical device (10);
- connecting the power storing device (30) to the at least one electrical device (10);
- first charge controlling (40) first and second electrical current values supplied to the at least one electrical device (10) from, respectively, the converter output (22) and the power storing device (30), depending on information about the general electrical system.

23. A method according to claim 22, further comprising a second charge controlling (50) electrical current value supplied to the power storing device (30), depending on information about the general electrical system.
